(19) Europäisches Patentamt
European Patent Office
Office européen des brevets

(11) **EP 2 892 283 A1**

(12) **EUROPEAN PATENT APPLICATION**
published in accordance with Art. 153(4) EPC

(43) Date of publication:
**08.07.2015 Bulletin 2015/28**

(21) Application number: **13832191.4**

(22) Date of filing: **08.07.2013**

(51) Int Cl.:
***H04W 52/02*** *(2009.01)*

(86) International application number:
**PCT/JP2013/068671**

(87) International publication number:
**WO 2014/034281 (06.03.2014 Gazette 2014/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **31.08.2012 JP 2012191201**

(71) Applicant: **NTT DOCOMO, INC.**
**Chiyoda-ku**
**Tokyo 100-6150 (JP)**

(72) Inventors:
• **TAKIGUCHI, Takahiro**
**Tokyo 100-6150 (JP)**

• **KIYOSHIMA, Kohei**
**Tokyo 100-6150 (JP)**
• **MASUDA, Masafumi**
**Tokyo 100-6150 (JP)**
• **KAWABE, Yasuhiro**
**Tokyo 100-6150 (JP)**
• **HARANO, Seigo**
**Tokyo 100-6150 (JP)**

(74) Representative: **Maury, Richard Philip**
**Marks & Clerk LLP**
**90 Long Acre**
**London WC2E 9RA (GB)**

(54) **RADIO BASE STATION APPARATUS, RADIO BASE STATION CONTROL APPARATUS AND TRANSITION CONTROL METHOD**

(57) A radio base station apparatus includes a count retrieval unit configured to retrieve a call origination/reception count and a handover count within a predetermined time interval, an idle transition timer value controller configured to adjust an idle transition timer value representing a time period from completion of communication with a mobile station until the mobile station is caused to transition to an idle mode based on the retrieved call origination/termination count and the retrieved handover count, and an idle transition controller configured to cause the mobile station to transition to the idle mode based on the adjusted idle transition timer value.

FIG.1

**Description**

TECHNICAL FIELD

The present invention relates to a radio base station apparatus, a radio base station controller and a transition control method.

BACKGROUND ART

After completing communication, a mobile station in a mobile communication system transitions to a power saving mode, so as to reduce battery energy consumption. For example, in a Long Term Evolution (LTE) system, when further communication is not performed for a fixed time interval after completing communication, a mobile station transitions to an idle mode. Here, a non-communication time period from the end of the communication until the mobile station is caused to transition to the idle mode is referred to as an " idle transition timer value." In an LTE system, such an operation mode of a mobile station is managed by a radio base station apparatus (eNB). When the mobile station is to switch the operation mode, it may be required to receive a command from the radio base station apparatus (cf. 3GPP TS36.304 v9.8.0).

SUMMARY OF THE INVENTION

PROBLEM TO BE SOLVED BY THE INVENTION

The idle transition timer value provides the following effect to a network.
When call origination/reception occurs for a mobile station in the idle mode, it may be required to cause the mobile station to transition to a communication (connected) mode. Accordingly, the smaller the idle transition timer value is, the heavier the load on the call origination/reception becomes.
When a mobile station in the connected mode moves across a plurality of cells, handover is executed. Accordingly, the greater the idle transition timer value is, the heavier the load on the handover becomes.
As described above, for a cell in which the call origination/reception frequently occurs, it is desirable that the idle transition timer value is greater, while for a cell in which the handover frequently occurs, it is desirable that the idle transition timer is smaller.
However, time and cost may be required to optimize the idle transition timer value for each cell. Moreover, the optimum idle transition timer value varies depending on time of day, a day of the week, an event, and so forth, even if the cell is the same.
An object of the present invention is to determine the idle transition timer value by considering the signaling load caused by the load on the call origination/reception and the load on the handover.

MEANS FOR SOLVING THE PROBLEM

A radio base station apparatus according to one embodiment of the present invention includes a count retrieval unit configured to retrieve a call origination/reception count and a handover count within a predetermined timer interval; an idle transition timer value controller configured to adjust an idle transition timer value, based on the retrieved call origination/reception count and the retrieved handover count, wherein the idle transition timer value represents a time period from an end of communication with a mobile station until the mobile station is caused to transition to an idle mode; and an idle transition controller configured to cause the mobile station to transition to the idle state, based on the adjusted idle transition timer value.
A radio base station controller according to one embodiment of the present invention is a radio base station controller that is connected to a radio base station apparatus, the radio base station controller including a count retrieval unit configured to retrieve a call origination/reception count and a handover count within a predetermined time interval; an idle transition timer value controller configured to adjust an idle transition timer value, based on the retrieved call origination/reception count and the retrieved handover count, wherein the idle transition timer value represents a time period from an end of communication with a mobile station until the mobile station is caused to transition to an idle mode; and an idle transition timer value communication unit configured to communicate the adjusted idle transition timer value to the radio base station, so as to cause the mobile station to transition to the idle state.
A transition control method according to one embodiment of the present invention is a transition control method to be executed by a radio base station apparatus, the method including a step of retrieving a call origination/reception count and a handover count within a predetermined time interval; a step of adjusting an idle transition timer value representing a time period from an end of communication with a mobile station until the mobile station is caused to transition to an idle mode, based on the retrieved call origination/reception count and the retrieved handover count; and a step of causing the mobile station to transition to the idle mode, based on the adjusted idle transition timer value.

A transition control method according to one embodiment of the present invention is a transition control method to be executed by a radio base station controller that is connected to a radio base station apparatus, the method including a step of retrieving a call origination/reception count and a handover count within a predetermined time interval; a step of adjusting an idle transition timer value representing a time period from an end of communication with a mobile station until the mobile station is caused to transition to an idle mode, based on the retrieved call origination/reception count and the retrieved handover count; and a step of communicating the adjusted idle transition timer value to the radio base station apparatus, so as to cause the mobile station to transition to the idle mode.

EFFECT OF THE PRESENT INVENTION

According to the present invention, the idle transition timer value can be determined by considering the signaling load that is caused by the load on the call origination/reception and the load on the handover.

BRIEF DESCRIPTION OF THE DRAWINGS

FIG. 1 is a configuration diagram of a communication system according to an embodiment of the present invention;
FIG. 2 is a diagram showing state transition of a mobile station;
FIG. 3 shows an example of a table that is used for selecting a traffic characteristic;
FIG. 4 shows an example of a table (version 1) that is used for selecting an idle transition timer value;
FIG. 5 shows an example of the table (version 2) that is used for selecting the idle transition timer value;
FIG. 6 is a sequence diagram of a transition control method according to the embodiment of the present invention;
FIG. 7 is a flowchart of the transition control method according to the embodiment of the present invention; and
FIG. 8 is a configuration diagram of a communication system according to a modified example of the present invention.

EMBODIMENTS FOR CARRYING OUT THE INVENTION

With an embodiment of the present invention, there is explained a transition control method to be executed by a radio base station apparatus (eNB) for causing a mobile station (UE) to transition to an idle state.

The eNB retrieves a call origination/reception count (a number of times of call origination/reception) and a handover count (a number of times of handover) within a predetermined time interval. The eNB adjusts an idle transition timer value representing a time period from an end of communication with a mobile station until the mobile station is caused to transition to an idle mode, based on the retrieved call origination/reception count and the retrieved handover count. When a non-communication time period after completion of the communication exceeds the idle transition timer value, the eNB causes the mobile station to transition to the idle mode.

Hereinafter, the embodiment of the present invention is explained in detail by using the drawings.

<Configuration of communication system>

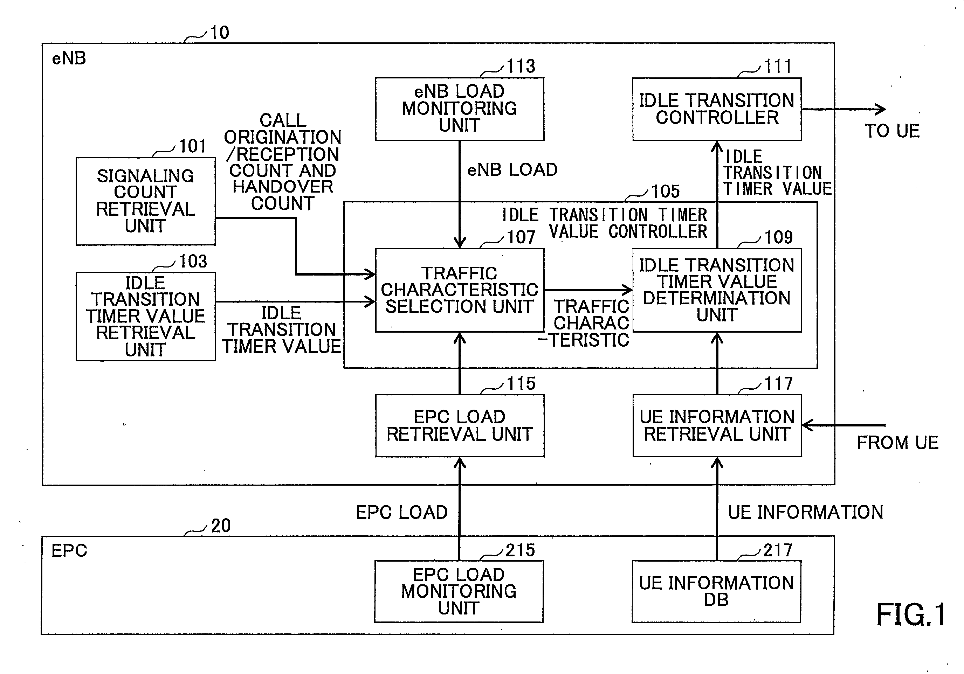

FIG. 1 is a configuration diagram of a communication system according to the embodiment of the present invention. The communication system may include a radio base station apparatus (eNB) 10, a core network apparatus (EPC) 20, and a mobile station (UE) (not shown). The communication system, typically, includes a plurality of eNBs 10, a plurality of EPCs 20, and a plurality of UEs.

The eNB 10 transmits a downlink radio signal to and receives an uplink radio signal from a UE that is served in the cell. In the embodiment, the eNB 10 communicates with the UE. When no further communication is executed for a fixed time interval after completing the communication with the UE, the eNB 10 causes the UE to transition to an idle mode. The time period from the end of the communication with the UE until the UE is caused to transition to the idle mode is referred to as an "idle transition timer value." Here, when no further communication is executed after the end of the communication prior to transition to the idle mode, the UE may transition to a discontinuous reception (DRX) mode. The time period from the end of the communication until the transition to the DRX mode is referred to as a "DRX transition timer value."

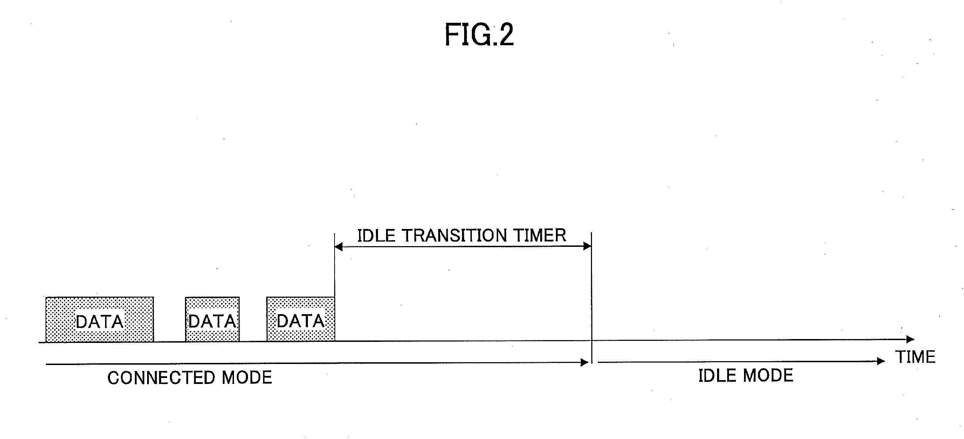

FIG. 2 shows state transition of the mobile station. The UE communicates with the eNB 10 in a communication (connected) mode. When a non-communication time period exceeds the DRX transition timer value, the UE with a DRX function transitions to the DRX mode, during which reception is performed only for predetermined intervals. When the non-communication time period exceeds the idle transition timer value, the UE is caused to transition to the idle mode by a command from the eNB 10. In general, when the UE includes the DRX function, the UE transitions to the DRX mode after completion of the communication, and subsequently transitions to the idle mode.

The EPC 20 is connected to a plurality of the eNBs 10, and the EPC 20 maintains information of the UEs and transmits data among access networks. The EPC 20 can function as a controller that controls a plurality of the eNBs.

The UE is a device that executes radio communication with the eNB 10. For convenience of the explanation, a mobile terminal is used. However, it can be a fixed terminal. Accordingly, any user equipment capable of executing radio communication with the eNB 10 may be used, in general. For example, the user equipment may be a mobile phone, a smart phone, an information terminal, a mobile personal computer, or the like. However, the user equipment is not limited to these. The types of the UE include UE with the DRX function and UE without the DRX function. The UE with the DRX function can operate in a power saving mode, such as the DRX mode and the idle mode. The UE without the DRX function can operate in a power saving mode, such as the idle mode.

The eNB 10 may include a signaling count retrieval unit 101, an idle transition timer value retrieval unit 103, an idle transition timer value controller 105, an idle transition controller 111, an eNB load monitoring unit 113, an EPC load retrieval unit 115, and a UE information retrieval unit 117.

The signaling count retrieval unit 101 retrieves a call origination/reception count within a predetermined time interval. For example, the signaling count retrieval unit 101 retrieves, as a call origination/reception count that is the number of times that mobile stations transition from the idle mode to the connected mode, a data transmission count, a data reception count, a voice call origination count, a voice call reception count, and a transmission count for location registration. Here, the signaling count retrieval unit 101 may exclude a part of these call origination/reception counts. For example, the signaling count retrieval unit 101 may or may not retrieve the voice call origination count. For example, the signaling count retrieval unit 101 may or may not retrieve the transmission count for the location registration.

Additionally, the signaling count retrieval unit 101 retrieves a handover count during the predetermined time interval. For example, the signaling count retrieval unit 101 retrieves a handover count by mobile stations in the connected state and a number of times of transitions between radio access technologies (RATs) (inter-RAT transition count). The inter-RAT transition count from the Long Term Evolution (LTE) to the Universal Mobile Telecommunications System (UMTS) includes, for example, a handover count from the LTE to the UMTS and that of release with redirection, in which handover to the UMTS is executed while disconnecting the LTE. Here, the signaling count retrieval unit 101 may exclude a part of the numbers of the times of handover. For example, the signaling count retrieval unit 101 may exclude the handover within the eNB 10 because the handover between sectors of the eNB 10 may not affect the EPC 20. However, the inter-RAT transition count may be retrieved because the EPC 20 may be affected, even if it is the handover within the eNB 10.

The idle transition timer value retrieval unit 103 retrieves the idle transition timer value that is currently set in the eNB 10.

The idle transition timer value controller 105 adjusts the idle transition timer value based on the retrieved call origination/reception count and the retrieved handover count at every predetermined time period or at a predetermined time period, for example. Specifically, the idle transition timer value controller 105 calculates the load on the call origination/reception and the load on the handover from the retrieved call origination/reception count and the retrieved handover count, and the idle transition timer value controller 105 adjusts the idle transition timer value, so that the signaling load caused by both the load on the call origination/reception and the load on the handover is reduced. It is desirable that the idle transition timer value is adjusted, so that the signaling load caused by both the load on the call origination/reception and the load on the handover is minimized. The load on the call origination/reception indicates the load that is borne by the network (eNB or EPC) due to the call origination/reception of mobile stations in the idle mode. The load on the handover indicates the load that is borne by the network (eNB or EPC) due to execution of the handover by mobile stations in the connected mode. The load on the call origination/reception and the load on the handover may be the load that is borne by both the eNB 10 and the EPC 20, may be the load that is borne only by the eNB 10, or may be the load that is borne only by the EPC 20.

The idle transition timer value controller 105 includes a traffic characteristic selection unit 107 and a transition timer value determination unit 109.

The traffic characteristic selection unit 107 calculates a ratio between the load on the call origination/reception and the load on the handover from the retrieved call origination/reception count and the retrieved handover count, and the traffic characteristic selection unit 107 selects a traffic characteristic in the eNB 10, based on the idle transition timer value at the time of calculating the ratio and the calculated ratio. For example, assume that the call origination/reception count is A and the handover count is B. In this case, the traffic characteristic selection unit 107 calculates the ratio C between the load on the call origination/reception and the load on the handover as below.

$$C = B/A \text{ or } C = B/(A+B)$$

As described above, the call origination/reception count may or may not include the voice call origination/reception. The call origination/reception count may or may not include the transmission count for the location registration. Furthermore, the number of times of the handover within the eNB may be excluded from the handover count B, however the handover count B may include the inter-RAT transition count.

The call origination/reception count A may be calculated by providing corresponding weights to the data transmission count, the data reception count, the voice call origination count, the voice call reception count, and the transmission count for location registration.

$A = \alpha_1 \times$(the data transmission count) $+ \alpha_2 \times$(the data reception count) $+ \alpha_3 \times$(the voice call origination count)$+ \alpha_4 \times$(the voice call reception count) $+ \alpha_5 \times$(the transmission count for the location registration)

Here, $\alpha_1$ to $\alpha_5$ represent weighting coefficients for the corresponding counts. For example, when the load borne by the network due to the data transmission is 1, and when the load borne by the network due to the voice call origination is 2, the weighting coefficients are determined, so that $\alpha_3$ is twice as much as $\alpha_2$.

Similarly, the handover count B may be calculated by weighting the handover count and the inter-RAT transition count as below.

$$B = \beta_1 \times (\text{the handover count}) + \beta_2 \times (\text{the inter-RAT transition count})$$

Here, $\beta_1$ and $\beta_2$ represent the weighting coefficients for the corresponding counts.

The traffic characteristic selection unit 107 selects a traffic characteristic of the cell by comparing a threshold value that is set for the idle transition timer value at the time of calculating the ratio C (namely, the idle transition timer value that is currently set) with the ratio C.

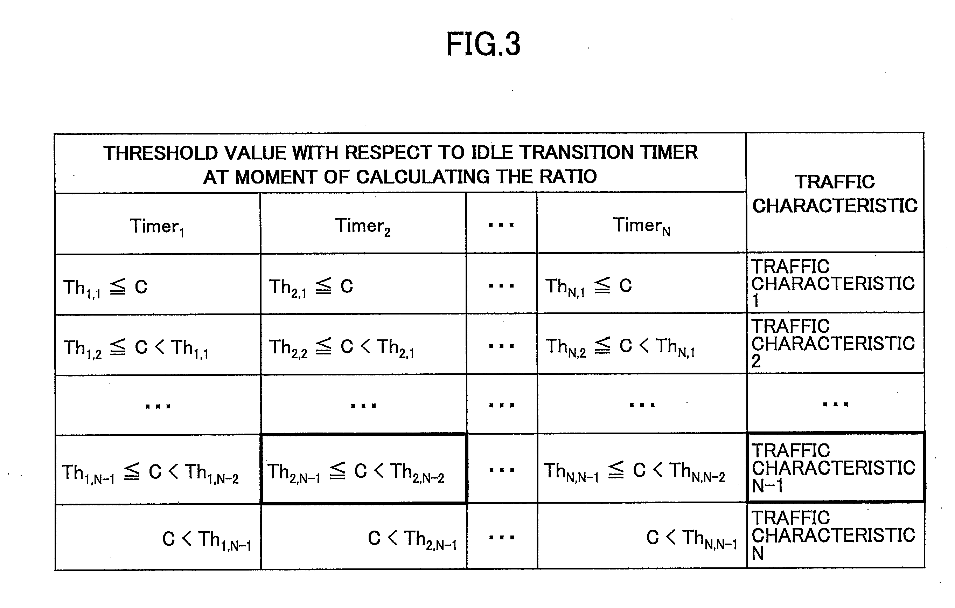

FIG. 3 shows an example of a table that is used for selecting the traffic characteristic. The table shows a relationship between the idle transition timer values and the traffic characteristic. For each adjustable idle transition timer value, a threshold value (or threshold values) for selecting the traffic characteristic is (are) defined. That is because the traffic characteristic varies depending on the idle transition timer value that is currently set. For example, when the idle transition timer value that is currently set is $\text{Timer}_2$, and when the value of C for $\text{Timer}_2$ satisfies $\text{Th}_{2, N-1} \leq C < \text{Th}_{2, N-2}$, the traffic characteristic N-1 is selected. Here, for selecting the traffic characteristic, in order to avoid that the idle transition timer value is frequently changed due to frequent changing of the traffic characteristic, hysteresis may be defined. Here, the hysteresis means, for example, to differentiate "the threshold value for selecting the traffic characteristic N-1 from the traffic characteristic N" from "the threshold value for selecting the traffic characteristic N from the traffic characteristic N-1." Additionally, a protection step number may be defined such that, when the value of C satisfies $\text{Th}_{2, N-1} \leq C < \text{Th}_{2, N-2}$ a predetermined number of times, the traffic characteristic N-1 is selected. The protection step number means that, when a certain condition is satisfied a predetermined number of times, a traffic characteristic is selected.

The idle transition timer value determination unit 109 determines the idle transition timer value based on the selected traffic characteristic.

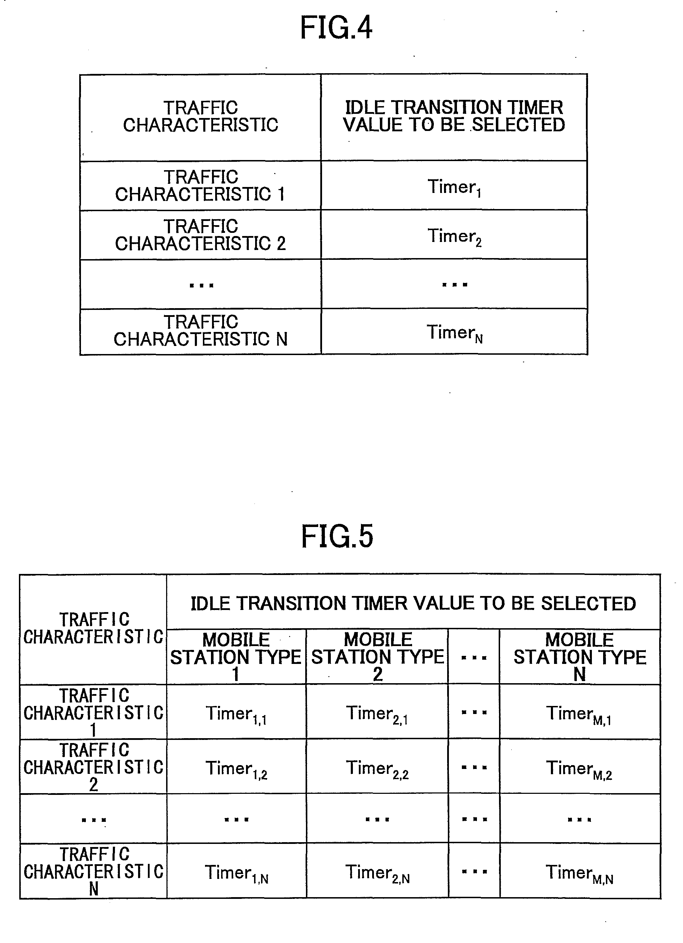

FIG. 4 shows an example of a table that is used for selecting the idle transition timer value. The table shows a relationship between the traffic characteristic and the idle transition timer value to be selected. For example, when the traffic characteristic N-1 is selected, the idle transition timer value $\text{Timer}_{N-1}$ is to be selected.

The idle transition timer value controller 105 may update the idle transition timer value with respect to all the mobile stations that are connected to the eNB 10. In this case, when a mobile station's non-communication time period after completion of communication is greater than the updated idle transition timer value, the mobile station is commanded to transfer to the idle mode at a moment at which the idle transition timer value is updated.

Alternatively, in order to avoid that a mobile station rapidly transitions from the connected mode to the idle mode due to shortening of the idle transition timer value, the idle transition timer value controller 105 may adjust the idle transition timer value with respect to mobile stations that are connected to or handed over to the eNB 10 after the idle transition timer value is updated.

Alternatively, in order to avoid that a mobile station rapidly transitions from the connected mode to the idle mode due to shortening of the idle transition timer value, the idle transition timer value controller 105 may adjust the idle transition timer value with respect to mobile stations that are connected to or handed over to the eNB 10 after the idle transition timer value is updated, and with respect to mobile stations whose non-communication time period after completion of communication is less than or equal to the updated idle transition timer value among mobile stations that are already connected to the eNB 10 at the moment at which the idle transition timer value is updated. For example, when the idle transition timer value is updated from 120 seconds to 60 seconds, the idle transition timer value is updated to be 60 seconds with respect to a mobile station whose non-communication time period after completion of communication is 30 seconds, while the idle transition timer value is maintained to be 120 seconds with respect to a mobile station whose non-communication time period after completion of communication is 100 seconds. Suppose that a mobile station transitions to the idle mode because the idle transition timer value is maintained to be 120 seconds for the mobile station and the mobile station does not execute communication for 120 seconds. In this case, the idle transition timer value of 60 seconds is set to the mobile station at a moment at which the mobile station attempts to connect to the eNB 10 and transitions to the connected mode.

The idle transition controller 111 causes a mobile station to transition to the idle mode based on the adjusted idle transition timer value.

The eNB load monitoring unit 113 monitors the load on the eNB 10. For example, the eNB load monitoring unit 113 monitors the load that is to be borne by the eNB 10 (e.g., the CPU utilization rate) due to one call origination/reception or handover. The load on the eNB 10 may be used for determining the weighting coefficients $\alpha_1$ - $\alpha_5$ and $\beta_1$ - $\beta_2$.

The EPC load retrieval unit 115 retrieves the load on the EPC 20 from the EPC 20. For example, the EPC load retrieval unit 115 retrieves the load to be borne by the EPC 20 due to one call origination/reception or handover from the EPC 20. The load on the eNB 20 may be used for determining the weighting coefficients $\alpha_1$ - $\alpha_5$ and $\beta_1$ - $\beta_2$.

The UE information retrieval unit 117 retrieves information about a mobile station. The UE information retrieval unit 117 may retrieve a mobile station type that is maintained by the EPC 20, may retrieve a mobile station type from the UE, and/or may retrieve mobility of a mobile station from the UE. The types of mobile stations may be categorized depending on whether battery duration is long or short. The mobility of a mobile station is an indicator indicating whether the mobile station is frequently moved. For example, the mobility of a mobile station may be obtained by a total distance traveled per unit time or the size of the moving range.

For a case in which information about a mobile station is to be considered, the idle transition timer value determination unit 109 determines the idle transition timer value based on the selected traffic characteristic and the information about the mobile station.

FIG. 5 shows an example of a table that is used for selecting the idle transition timer value. The table shows a relationship between the traffic characteristic and the idle transition timer value that is to be selected depending on the mobile station type. As the idle transition timer value is reduced, the likelihood of transition, upon call origination/reception, from the idle mode to the connected mode increases, thereby lowering the response performance. In an LTE system, the procedure is simplified for transitioning from the idle mode to the connected mode. Accordingly, the effect of shortening the idle transition timer value on response performance of a mobile station is significantly smaller than the effect on the network. For this reason, when the idle transition timer value is set depending on the the mobile station type, the battery duration of the mobile station or the mobility is to be mainly focused on. In general, an amount of current consumption of the connected mode is greater than that of the idle mode. Thus, battery duration of a mobile station becomes worse as the idle transition timer value becomes greater. Accordingly, for example, in this table, a smaller idle transition timer value is set for a mobile station whose battery duration is short, such as a mobile station with a small battery or a mobile station for which an amount of current consumption during the DRX mode is large, compared to a mobile station whose battery duration is long. Additionally, a greater idle transition timer value is set for a mobile station whose mobility is small, such as a mobile station that is connected to a power supply, compared to a mobile station whose mobility is large. For example, when the traffic characteristic N-1 is selected and the mobile station type is 2, the idle transition timer value of $Timer_{2,\ N-1}$ is to be selected.

Even if the information about a mobile station is to be considered, when the processing of the eNB 10 and/or the EPC 20 is congested, the idle transition timer value determination unit 109 may select the idle transition timer by assuming that types of all mobile stations are a specific mobile station type (e.g., the mobile station type 1). By doing this, during congestion, an idle transition timer value can be selected with which the load on the network is optimized, instead of optimizing the battery duration of the mobile stations.

The EPC 20 includes an ECP load monitoring unit 215 and a UE information DB 217.

The EPC load monitoring unit 215 monitors the load on the EPC 20. For example, the EPC load monitoring unit 215 monitors the load to be borne by the EPC 20 (e.g., the CPU utilization rate) due to one call origination/reception or handover. The load on the EPC 20 may be used for determining the weighting coefficients $\alpha_1$ - $\alpha_5$ and $\beta_1$ - $\beta_2$.

The UE information DB 217 maintains information on UE. For example, the UE information DB 217 may define correspondence between a UE identifier and an actual value that differs depending on the mobile station type, such as current consumption during the DRX mode, current consumption during the idle mode, or a transition time period from the idle mode to the connected mode, and may stores the actual values. In addition, a battery capacity of UE may be stored. Further, the UE information DB 217 may define a correspondence between the UE identifier and the mobile station type, and may store the mobile station type.

<Operation of communication system>

Next, there is explained an operation of the communication system according to the embodiment of the present invention.

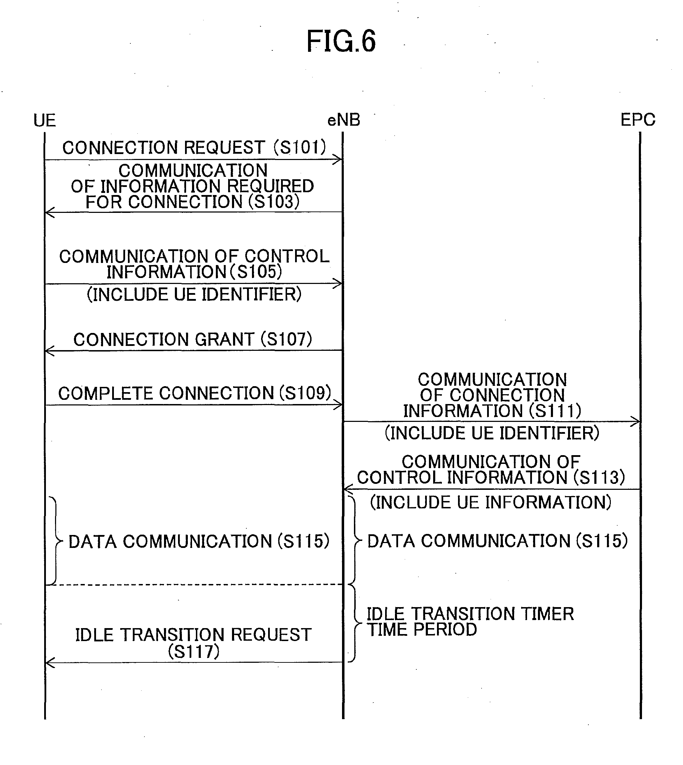

FIG. 6 is a sequence diagram of a transition control method according to the embodiment of the present invention. First, for starting communication, a mobile station transmits a connection request to an eNB (S101). The eNB that receives the connection request transmits information that may be required for a connection, such as synchronization timing, to the mobile station (S103). Next, the mobile station transmits control information, such as a UE identifier, to the eNB (S105). At this time, the mobile station may transmit its own UE information, such as information as to whether the DRX function is included, to the eNB. The eNB that receives the control information transmits a connection grant signal to the mobile station (S107). The mobile station that completes the connection processing transmits a connection completion signal to the eNB (S109). Through completing the connection, the mobile station transitions to the connected mode.

Subsequently, the eNB transmits information about the connected mobile station, such as the identifier of the UE, to an EPC (S111). The EPC that receives communication on the connection information retrieves the UE information from the UE identifier, and transmits control information including the UE information to the eNB (S113). The eNB that receives the communication on the control information starts executing communication with the mobile station (S115).

Upon completion of the communication, the eNB starts measuring a non-communication time period. As described above, when the non-communication time period exceeds a timer value that is adjusted by the idle transition timer value controller 105, the eNB communicates an idle transition request to the mobile station (S117). Here, after completion of the communication, the mobile station may automatically transition to the DRX. The mobile station that receives the idle transition request transitions to the idle mode.

Next, there is explained a specific transition control method that is executed in the eNB.

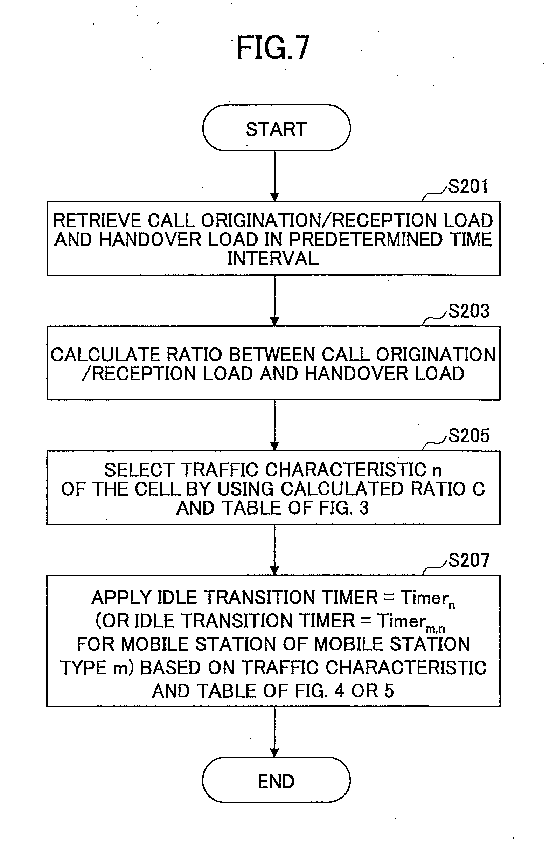

FIG. 7 shows a flowchart of a transition control method according to the embodiment of the present invention.

The eNB retrieves, by the signaling count retrieval unit 101, a call origination/reception count and a handover count within a predetermined time interval (S201). The eNB calculates, by the traffic characteristic selection unit 107, a ratio C between a load on the call origination/reception and a load on the handover from the retrieved call origination count and the retrieved handover count (S203). The eNB also selects, by the traffic characteristic selection unit 107 and by using the table of FIG. 3, the traffic characteristic n in the eNB 10, based on the idle transition timer value at the moment of calculating the ratio and the calculated ratio (S205). Then, the eNB applies, by the idle transition timer value determination unit 109, the idle transition timer = $Timer_{m,n}$ to mobile stations whose mobile station types are m (m=1, 2, ..., M), based on the selected traffic characteristic n and the table of FIG. 5. Here, when the mobile station type is not considered, the eNB applies, by the idle transition timer determination unit 109, the idle transition timer = $Timer_n$, based on the selected traffic characteristic n and the table of FIG. 5 (S207).

<Modified example>

In the above-described embodiment, the idle transition timer value is controlled by the eNB 10. Hereinafter, a case is described in which the idle transition timer value is controlled by the EPC 20.

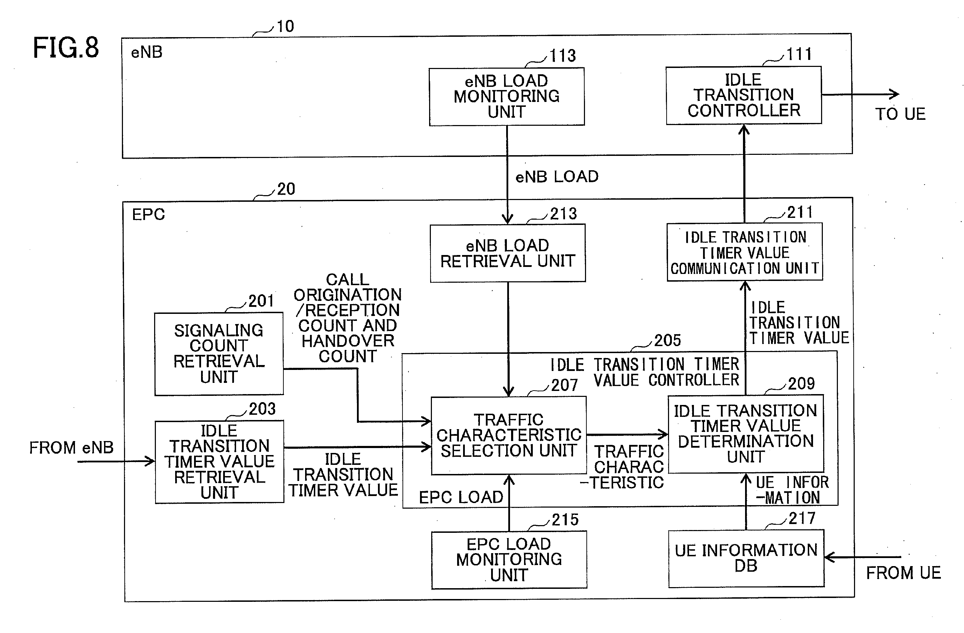

FIG. 8 is a configuration diagram of a communication system according to the modified example of the present invention.

The eNB 10 includes the idle transition controller 111 and the eNB load monitoring unit 113.

The idle transition controller 111 causes a mobile station to transition to the idle mode, based on the idle transition timer value that is adjusted by the EPC 20.

As described above, the eNB load monitoring unit 113 monitors the load on the eNB 10.

The ECP 20 includes a signaling count retrieval unit 201; an idle transition timer value retrieval unit 203; an idle transition timer value controller 205; an idle transition timer value communication unit 211; an eNB load retrieval unit 213; the EPC load monitoring unit 215; and the UE information DB 217.

As described above, the signaling count retrieval unit 201 retrieves the call origination/reception count and the handover count within the predetermined time interval. In this case, as the call origination/reception count and the handover count, the information within the EPC may be retrieved.

The idle transition timer value retrieval unit 203 retrieves the idle transition timer value that is currently set in the eNB 10 from the eNB 10. Here, when the eNB 10 immediately applies the idle transition timer value that is determined by the EPC 20 to mobile stations that are connected to the eNB 10, the idle transition timer value retrieval unit 203 may retrieve the idle transition timer value that is determined by the EPC.

As described above, the idle transition timer value controller 205 adjusts the idle transition timer value based on the retrieved call origination/reception count and the retrieved handover count. The idle transition timer value controller 205 includes a traffic characteristic selection unit 207 and an idle transition timer value determination unit 209.

As described above, the traffic characteristic selection unit 207 calculates the ratio between the load on the call origination/reception and the load on the handover. The traffic characteristic selection unit 207 selects the traffic characteristic in the eNB 10 based on the idle transition timer value at the moment of selecting the ratio and the calculated ratio.

As described above, the idle transition timer value determination unit 209 determines the idle transition timer value based on the selected traffic characteristic.

The idle transition timer value communication unit 211 communicates the adjusted idle transition timer value to the eNB 10 so as to cause mobile stations to transition to the idle mode.

The eNB load retrieval unit 213 retrieves the load on the eNB 10 from the eNB 10.

As described above, the EPC load monitoring unit 215 monitors the load on the EPC 20.

As described above, the UE information DB 217 maintains the information about the UE.

The operation of the communication system shown in FIG. 8 is executed similar to FIGS. 6 and 7.

For convenience of the explanation, the devices according to the embodiment of the present invention are explained by using functional block diagrams. However, the devices according to the present invention may be implemented in hardware, software, or combination thereof. Additionally, each of the functional units may be combined with one or more of others depending on necessity.

For convenience of the explanation, the methods according to the embodiment of the present invention are described by using the sequence diagrams or the flowcharts that show the process flow. However, the methods according to the present invention may be executed in orders that are different from the orders indicated by the embodiment.

<Effect of the embodiment>

According to the embodiment of the present invention, an idle transition timer value can be determined by considering the signaling load caused by both the load on the call origination/reception and the load on the handover. Specifically, the load to be borne by the network due to the call origination/reception and the handover can be minimized.

In this manner, such waste can be avoided that a maintenance person sets an idle transition timer value for each eNB. Further, the idle transition timer can be automatically set in response to a change of the traffic characteristic, due to time of day, a day of the week, an event, and so forth.

Further, by adjusting the idle timer value for mobile stations that attempt to connect to or hand over to the eNB 10 after the idle transition timer value is updated, the load to be borne by the eNB that is caused by rapid change of the idle timer value can be reduced. Similarly, by adjusting the idle timer value for mobile stations that attempt to connect to or hand over to the eNB 10 after the idle transition timer value is updated and for mobile stations whose non-communication time period after completion of communication is less than or equal to the updated idle transition timer value among mobile stations that are connected to the eNB at the moment at which the idle transition timer value is updated, the load to be borne by the eNB that is caused by rapid change of the idle timer value can be reduced.

Additionally, by considering the information about a mobile station, battery duration of the mobile station can be enhanced. Here, during congestion, by assuming a specific mobile station type, instead of considering the battery duration of the mobile station, the load on the network can be optimized.

The embodiment of the present invention is described above. However, the present invention is not limited to the above-described embodiment, and various modifications and applications may be made within the scope of the claims.

The present international application is based on and claims the benefit of priority of Japanese Patent Application No. 2012-191201, filed on August 31, 2012, the entire contents of Japanese Patent Application No. 2012-191201 are incorporated by reference.

LIST OF REFERENCE SYMBOLS

10: Radio base station apparatus (eNB)
101: Signaling count retrieval unit
103: Idle transition timer value retrieval unit
105: Idle transition timer value controller
107: Traffic characteristic selection unit
109: Idle transition timer value determination unit
111: Idle transition controller
113: eNB load monitoring unit
115: EPC load retrieval unit
117: UE information retrieval unit
20: Core network apparatus (EPC)
215: EPC load monitoring unit
217: UE information DB

**Claims**

1. A radio base station apparatus comprising:

   a count retrieval unit configured to retrieve a call origination/reception count and a handover count within a predetermined time interval;

   an idle transition timer value controller configured to adjust an idle transition timer value representing a time period from completion of communication with a mobile station until the mobile station is caused to transition to an idle mode, based on the retrieved call origination/reception count and the retrieved handover count; and

   an idle transition controller configured to cause the mobile station to transition to the idle mode based on the adjusted idle transition timer value.

2. The base station apparatus according to claim 1,

   wherein the idle transition timer value controller is configured to calculate a call origination/reception load and a handover load from the retrieved call origination/reception count and the retrieved handover count, and the idle transition timer value controller is configured to adjust the idle transition timer value, so that a signaling load caused by both the call origination/reception load and the handover load is reduced.

3. The radio base station apparatus according to claim 1,

   wherein the idle transition timer value controller includes

   a traffic characteristic selection unit configured to calculate a ratio between the call origination/reception load and the handover load from the retrieved call origination/reception count and the retrieved handover count, wherein the traffic characteristic selection unit is configured to select a traffic characteristic in the radio base station apparatus based on the idle transition timer value at a moment of calculating the ratio and the calculated ratio, and

   an idle transition timer value determination unit configured to determine an idle transition timer value based on the selected traffic characteristic.

4. The radio base station apparatus according to claim 3, further comprising:

   a mobile station information retrieval unit configured to retrieve information on the mobile station,

   wherein the idle transition timer value determination unit is configured to determine the idle transition timer value based on the selected traffic characteristic and the retrieved information on the mobile station.

5. The radio base station apparatus according to claim 1,

   wherein the idle transition timer value controller is configured to adjust the idle transition timer value of each of the mobile stations connected to the radio base station apparatus.

6. The radio base station apparatus according to claim 1,

   wherein the idle transition timer value controller is configured to adjust the idle transition timer value with respect to the mobile station that attempts to connect to or hand over to the radio base station apparatus after the idle transition timer value is updated.

7. The radio base station apparatus according to claim 6,

   wherein the idle transition timer value controller is further configured to adjust the idle transition timer value with respect to the mobile station whose time period after the completion of the communication is less than or equal to the updated idle transition timer value, among the mobile stations that are connected to the radio base station at a moment at which the idle transition timer value is updated.

8. A radio base station controller that is connected to a radio base station apparatus, the radio base station controller comprising;

   a count retrieval unit configured to retrieve a call origination/reception count and a handover count within a predetermined time period;

   an idle transition timer value controller configured to adjust an idle transition timer value representing a time period from completion of communication with a mobile station until the mobile station is caused to transition to an idle mode; and

   an idle transition timer value communication unit configured to communicate the adjusted idle transition timer value to the radio base station apparatus, so as to cause the mobile station to transition to the idle mode.

**9.** A transition control method to be executed by a radio base station apparatus, the method comprising:

a step of retrieving a call origination/reception count and a handover count within a predetermined time interval;
a step of adjusting an idle transition timer value representing a time period from completion of communication with a mobile station until the mobile station is caused to transition to an idle mode, based on the retrieved call origination/reception count and the retrieved handover count; and
a step of causing the mobile station to transition to the idle mode, based on the adjusted idle transition timer value.

**10.** A transition control method to be executed by a radio base station controller that is connected to a radio base station apparatus, the method comprising:

a step of retrieving a call origination/reception count and a handover count within a predetermined time interval;
a step of adjusting an idle transition timer value representing a time period from completion of communication with a mobile station until the mobile station is caused to transition to an idle mode, based on the retrieved call origination/reception count and the handover count; and
a step of communicating the adjusted idle transition timer value to the radio base station apparatus, so as to cause the mobile station to transition to the idle mode.

FIG.1

EP 2 892 283 A1

# FIG.2

IDLE TRANSITION TIMER

DATA  DATA  DATA

CONNECTED MODE

IDLE MODE

TIME

EP 2 892 283 A1

# FIG.3

| THRESHOLD VALUE WITH RESPECT TO IDLE TRANSITION TIMER AT MOMENT OF CALCULATING THE RATIO | | | | TRAFFIC CHARACTERISTIC |
|---|---|---|---|---|
| $Timer_1$ | $Timer_2$ | ··· | $Timer_N$ | |
| $Th_{1,1} \leqq C$ | $Th_{2,1} \leqq C$ | ··· | $Th_{N,1} \leqq C$ | TRAFFIC CHARACTERISTIC 1 |
| $Th_{1,2} \leqq C < Th_{1,1}$ | $Th_{2,2} \leqq C < Th_{2,1}$ | ··· | $Th_{N,2} \leqq C < Th_{N,1}$ | TRAFFIC CHARACTERISTIC 2 |
| ··· | ··· | ··· | ··· | ··· |
| $Th_{1,N-1} \leqq C < Th_{1,N-2}$ | $Th_{2,N-1} \leqq C < Th_{2,N-2}$ | ··· | $Th_{N,N-1} \leqq C < Th_{N,N-2}$ | TRAFFIC CHARACTERISTIC N-1 |
| $C < Th_{1,N-1}$ | $C < Th_{2,N-1}$ | ··· | $C < Th_{N,N-1}$ | TRAFFIC CHARACTERISTIC N |

EP 2 892 283 A1

# FIG.4

| TRAFFIC CHARACTERISTIC | IDLE TRANSITION TIMER VALUE TO BE SELECTED |
|---|---|
| TRAFFIC CHARACTERISTIC 1 | $Timer_1$ |
| TRAFFIC CHARACTERISTIC 2 | $Timer_2$ |
| ... | ... |
| TRAFFIC CHARACTERISTIC N | $Timer_N$ |

# FIG.5

| TRAFFIC CHARACTERISTIC | IDLE TRANSITION TIMER VALUE TO BE SELECTED | | | |
|---|---|---|---|---|
| | MOBILE STATION TYPE 1 | MOBILE STATION TYPE 2 | ... | MOBILE STATION TYPE N |
| TRAFFIC CHARACTERISTIC 1 | $Timer_{1,1}$ | $Timer_{2,1}$ | ... | $Timer_{M,1}$ |
| TRAFFIC CHARACTERISTIC 2 | $Timer_{1,2}$ | $Timer_{2,2}$ | ... | $Timer_{M,2}$ |
| ... | ... | ... | ... | ... |
| TRAFFIC CHARACTERISTIC N | $Timer_{1,N}$ | $Timer_{2,N}$ | ... | $Timer_{M,N}$ |

# FIG.6

UE                                    eNB                                    EPC

CONNECTION REQUEST (S101)

COMMUNICATION
OF INFORMATION REQUIRED
FOR CONNECTION (S103)

COMMUNICATION OF CONTROL
INFORMATION (S105)
(INCLUDE UE IDENTIFIER)

CONNECTION GRANT (S107)

COMPLETE CONNECTION (S109)

COMMUNICATION
OF CONNECTION
INFORMATION (S111)
(INCLUDE UE IDENTIFIER)

COMMUNICATION OF
CONTROL INFORMATION (S113)
(INCLUDE UE INFORMATION)

DATA COMMUNICATION (S115)    DATA COMMUNICATION (S115)

IDLE TRANSITION TIMER
TIME PERIOD

IDLE TRANSITION REQUEST
(S117)

15

# FIG.7

START

$\swarrow$S201

RETRIEVE CALL ORIGINATION/RECEPTION LOAD AND HANDOVER LOAD IN PREDETERMINED TIME INTERVAL

$\swarrow$S203

CALCULATE RATIO BETWEEN CALL ORIGINATION /RECEPTION LOAD AND HANDOVER LOAD

$\swarrow$S205

SELECT TRAFFIC CHARACTERISTIC n OF THE CELL BY USING CALCULATED RATIO C AND TABLE OF FIG. 3

$\swarrow$S207

APPLY IDLE TRANSITION TIMER = $Timer_n$ (OR IDLE TRANSITION TIMER = $Timer_{m,n}$ FOR MOBILE STATION OF MOBILE STATION TYPE m) BASED ON TRAFFIC CHARACTERISTIC AND TABLE OF FIG. 4 OR 5

END

**FIG.8**

EP 2 892 283 A1

## INTERNATIONAL SEARCH REPORT

| International application No. |
| --- |
| PCT/JP2013/068671 |

| A. CLASSIFICATION OF SUBJECT MATTER |
| --- |
| *H04W52/02*(2009.01)i |

According to International Patent Classification (IPC) or to both national classification and IPC

| B. FIELDS SEARCHED |
| --- |
| Minimum documentation searched (classification system followed by classification symbols)<br>H04W4/00-H04W99/00, H04B7/24-H04B7/26 |

Documentation searched other than minimum documentation to the extent that such documents are included in the fields searched

| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

| C. DOCUMENTS CONSIDERED TO BE RELEVANT | | |
| --- | --- | --- |
| Category* | Citation of document, with indication, where appropriate, of the relevant passages | Relevant to claim No. |
| A | JP 2007-300510 A (NTT Docomo Inc.),<br>15 November 2007 (15.11.2007),<br>& US 2009/0103447 A1 & EP 2015601 A1<br>& WO 2007/129601 A1 | 1-10 |

| ☐ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>06 August, 2013 (06.08.13) | Date of mailing of the international search report<br>13 August, 2013 (13.08.13) |
| --- | --- |
| Name and mailing address of the ISA/<br>Japanese Patent Office | Authorized officer |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012191201 A